# EUROPEAN PATENT APPLICATION

(11) **EP 4 564 210 A1**
(43) Date of publication of application: **04.06.2025**
(21) Application number: 24216133.9
(22) Date of filing: 28.11.2024
(51) Int. Cl.: G06F 21/57, G06F 12/00, G06F 21/79, G06F 12/14, G06F 9/455

(54) **MEMORY CONTROLLER, METHOD FOR A MEMORY CONTROLLER AND APPARATUS FOR PROVIDING A TRUSTED DOMAIN-RELATED MANAGEMENT SERVICE**

(30) Priority: 30.11.2023 US 202363604211 P; 07.05.2024 US 202418656667
(71) Applicant: INTEL Corporation, Santa Clara, CA 95054 (US)
(72) Inventor: DEUTSCH, Sergej, Hillsboro, 97123 (US); DURHAM, David M., Beaverton, 97007 (US); GREWAL, Karanvir, Hillsboro, 97124 (US)
(74) Representative: 2SPL Patentanwälte PartG mbB

(57) **Abstract**

It is provided an apparatus comprising interface circuitry, machine-readable instructions, and processing circuitry to execute the machine-readable instructions. The machine-readable instructions comprise instructions to obtain a read request for reading data from an address in volatile memory. The machine-readable instructions further comprise instructions to determine whether the address in volatile memory is associated with a trusted domain. The machine-readable instructions further comprise instructions to set, if the address is associated with a trusted domain and the read request is obtained from outside the trusted domain, an identification tag for the trusted domain. The machine-readable instructions further comprise instructions to return, for the read request and subsequent read requests for one or more addresses associated with the trusted domain, poisoned data if the flag is set for the trusted domain.

## Description

### Background

A range of challenges emerges from the need to protect sensitive data and operations across various computing environments, including but not limited to virtual machines. Ensuring data integrity and preventing unauthorized access are important, especially when potential attackers may gain high-level privileges or physical access to systems. Integrating security solutions into diverse and existing digital infrastructures poses challenges related to compatibility and potential performance impacts. Virtual machines and other critical computing operations may be shielded from external threats.

### Brief description of the Figures

Some examples of apparatuses and/or methods will be described in the following by way of example only, and with reference to the accompanying figures, in which
Fig. 1 illustrates a block diagram of an example of a memory controller;
Fig. 2 illustrates a flow chart of the proposed technique;
Fig. 3 illustrates a block diagram of an example of an apparatus for providing a trusted domain-related management service;
Fig. 4 illustrates a flowchart of an example of a method; and
Fig. 5 illustrates a flowchart of an example of a method.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising ", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising" "including," "having," and the like, as used with respect to examples of the present disclosure, are synonymous.

Current implementation of Trusted Domain Execution (TDX) technology may use a "TD bit" stored in Error-Correcting Code (ECC) memory as logical integrity to identify whether a specific cacheline in memory is inside a trusted domain or not. If untrusted software (e.g., a virtual machine monitor (VMM)) tries to access the trusted domain (TD) memory, there is no explicit exception raised but the return data may set to zero to prevent ciphertext disclosure. If the VMM tries to corrupt the data by writing to it, the TD bit may be set to zero, so the trusted software will detect it on the next read. This may work as intended in a normal case.

However, the VMM may mount a so called "Rowhammer-attack" in attempt to inject undetected corruption into the TD or read TD's encrypted memory content. A Rowhammer attack is a type of cybersecurity attack that takes advantage of a hardware vulnerability in memory, such as dynamic random-access memory (DRAM), whereby repeatedly accessing a row of memory can cause bit flips in adjacent rows, leading to unauthorized access or data corruption. With a current implementation, any failed attempt to access TD memory by the VMM may be ignored, including uncorrectable ECC errors. A compromised VMM may in theory perform an unlimited number of corruption attempts in TD memory until the VMM succeeds. For instance, the VMM may first overwrite a TD cacheline (i.e., the TD bit may be set to 0) and then "rowhammer" that cacheline until the TD bit is flipped to 1 and the ECC reports either no error or a correctable error (verified by reading from non-TD and receiving all zeros). There may be no mechanism available, besides resetting the machine, preventing a malicious VMM from doing it, as it may ignore all errors and as long as the TD bit is set for TD memory when the trusted software reads from that address.

Current approaches may use a TD bit (or TEE-bit for trusted execution environment) as logical integrity. However, since TD bits are not cryptographic and may be manipulated, for instance by using Rowhammer-attack as described above, security problems may arise. Techniques which use a dedicated cryptographic message authentication code (MAC) to verify integrity of the data by trusted software may negatively impact performance and/or reliability, availability, and serviceability (RAS), as MACs need to be stored in either ECC memory or in sequestered memory. However, storing MACs in ECC memory may reduce the number of bits available to ECC and hence and may reduce RAS. Furthermore, storing MACs in sequestered memory may reduce the available memory and increase a performance overhead due to additional memory fetches.

In the present disclosure if the memory controller detects a non-TD read from TD memory (i.e., TD bit on request is 0 but the TD bit value returned from DRAM is 1), a hardware register (flag) is set. When this register flag is set, any read from the TD memory may return poisoned data (without poisoning DRAM). TD secure arbitration mode (SEAM) software may then perform a cleanup of the poisoned data in the caches and may shut down the affected TDs and resetting the hardware flag. Any detected attempt of untrusted software (e.g., VMM) to read TD memory may result in a shutdown of the TD. This may prevent attacks on the TD by the VMM, in which the VMM can ignore billions of failed attempts until achieving desired corruption of TD that won't be detected.

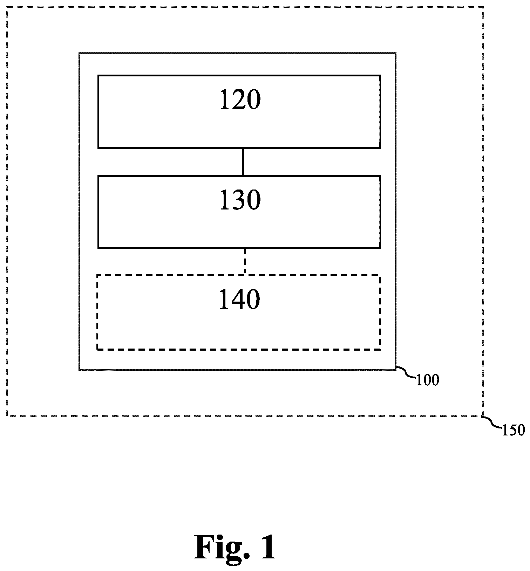

Fig. 1 illustrates a block diagram of an example of a memory controller 100 or device 100. The memory controller 100 comprises circuitry that is configured to provide the functionality of the memory controller 100. For example, the memory controller 100 of Fig. 1 comprises interface circuitry 120, processing circuitry 130 and (optional) storage circuitry 140. For example, the processing circuitry 130 may be coupled with the interface circuitry 120 and optionally with the storage circuitry 140. For example, the processing circuitry 130 may be configured to provide the functionality of the apparatus 100, in conjunction with the interface circuitry 120. For example, the interface circuitry 120 is configured to exchange information, e.g., with other components inside or outside the apparatus 100 and the storage circuitry 140. Likewise, the device 100 may comprise means that is/are configured to provide the functionality of the device 100.

The components of the device 100 are defined as component means, which may correspond to, or implemented by, the respective structural components of the memory controller 100. For example, the device 100 of Fig. 1 comprises means for processing 130, which may correspond to or be implemented by the processing circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

In general, the functionality of the processing circuitry 130 or means for processing 130 may be implemented by the processing circuitry 130 or means for processing 130 executing machine-readable instructions. Accordingly, any feature ascribed to the processing circuitry 130 or means for processing 130 may be defined by one or more instructions of a plurality of machine-readable instructions. The apparatus 100 or device 100 may comprise the machine-readable instructions, e.g., within the storage circuitry 140 or means for storing information 140.

The interface circuitry 120 or means for communicating 120 may correspond to one or more inputs and/or outputs for receiving and/or transmitting information, which may be in digital (bit) values according to a specified code, within a module, between modules or between modules of different entities. For example, the interface circuitry 120 or means for communicating 120 may comprise circuitry configured to receive and/or transmit information.

For example, the processing circuitry 130 or means for processing 130 may be implemented using one or more processing units, one or more processing devices, any means for processing, such as a processor, a computer or a programmable hardware component being operable with accordingly adapted software. In other words, the described function of the processing circuitry 130 or means for processing 130 may as well be implemented in software, which is then executed on one or more programmable hardware components. Such hardware components may comprise a general-purpose processor, a Digital Signal Processor (DSP), a micro-controller, etc.

For example, the storage circuitry 140 or means for storing information 140 may comprise at least one element of the group of a computer readable storage medium, such as a magnetic or optical storage medium, e.g., a hard disk drive, a flash memory, Floppy-Disk, volatile memory, Random Access Memory (RAM), Read Only Memory (ROM), Programmable Read Only Memory (PROM), Erasable Programmable Read Only Memory (EPROM), an Electronically Erasable Programmable Read Only Memory (EEPROM), Non-Volatile Dual In-Line Memory Module (NVDIMM), Compute Express Link (CXL) or a network storage.

The memory controller 100 may be part of a computing system 150 or may be connected to the computing system 150 (for example via the interface circuitry 120). The computing system 150 may comprise one or more processors, memory, interfaces etc. The memory controller 100 may be responsible for managing communication between a processor (such as a CPU) of the computing system 150 a memory of the computing system 150 (such as RAM or cache or the like). It may handle the flow of data, orchestrating read and write operations, managing timing, and ensuring data integrity. In some examples, the memory controller 100 may be a standalone chip. In another example, the memory controller 100 may be integrated into another component of a computing system 150 such as a CPU or GPU, reducing latency and increasing data transfer efficiency.

The processing circuitry 130 is configured to obtain a read request for reading data from an address in volatile memory. For example, the volatile memory may be the memory 130 or it may be another memory which may be connected to the processing circuitry 130 via the interface circuitry 120. Volatile memory may be a type of computer memory that requires power to maintain the stored information and may lose its data when the power is turned off. For example, of volatile memory may be RAM or cache memory or the like.

The processing circuitry 130 is configured to determine whether the address in volatile memory is associated with a trusted domain. In some examples, the processing circuitry 130 is configured to determine whether the address in volatile memory is associated with a trusted execution environment (TEE). A trusted domain is a designated area within the computing system 150 that securely isolates data and processes inside this trusted domain in the computing system 150. That is, it is protecting them from unauthorized access outside the trusted domain and external threats from within or outside the computing system 150.

The trusted domain may be defined based on hardware resources and/or software resources of the computing system 150. The hardware resources may comprise (parts of) a processor and/or (parts) of the memory such as volatile memory such as RAM or cache, which are secured. For example, the volatile memory may be a part of the trusted domain. The software resources may comprise specialized security protocols and secure operating systems. These resources may work in concert to establish a secure environment where sensitive data can be processed, and critical operations can be performed, all while being isolated from less secure parts of the system. Within the trusted domain, access controls may be enforced, and security measures may be implemented to ensure that only authorized processes and/or entities may interact with the data and applications, thereby maintaining their confidentiality, integrity, and availability against unauthorized access and security threats.

In some examples, dedicating specific hardware resources to a trusted domain may involve configuring the system at boot time to allocate specific resources like memory regions (i.e., certain memory addresses) or one or more CPU cores exclusively to the trusted domain or the like.

For example, it may be determined if an address in volatile memory is associated with a trusted domain through hardware-supported or software-supported mechanisms or by checking access control settings that are enforced by the system's security architecture.

A trusted domain may be used within the context of a Trusted Execution Environment (TEE). A TEE may be a secure area within computer system, for example within the processor of the computer system, designed to safeguard sensitive operations by isolating the execution of specific code and the processing of data from the rest computer system's operations. It provides robust protection against software and physical attacks, ensuring that the code and data within the TEE remain confidential and unaltered. It ensures the integrity and confidentiality of the data within its realm, leveraging security features to protect against unauthorized access and tampering. For example, parts of the processor or memory may be protected, for example the processor's cache lines, ensuring that storage areas are safeguarded from potential leaks or malicious attacks.

The processing circuitry 130 is configured to set an identification tag for the trusted domain if the address is associated with the trusted domain and the read request is obtained from outside the trusted domain. For example, the identification tag may be data that indicates if the address for which a read is requested is associated with a trusted domain and if the read request is obtained from outside the trusted domain. For example, the identification tag is a bit, which is set to 1 if the conditions are met. For example, the identification tag is a flag. For example, the identification bit is a field in the physical address.

The read request obtained from outside the trusted domain, for instance it is obtained from an area within the computing system 150 that is not part of the trusted domain or from an area outside of the computing system 150. For example, the read request originates from a software application running on the computing system 150 but running not inside the trusted domain (also referred to as untrusted software). In another example, the read request originates from hardware components like memory or processors that are not allocated as part of the trusted domain's secure resources. For example, the read request for reading data from the address in volatile memory may be a read request from a software to read data from the RAM and fetch it into the cache for further processing.

In some examples, the identification tag may be set in a hardware register. For example, a register may be a quickly accessible storage location within the CPU of the computing system 150.

In some examples, the identification tag is set for a single trusted domain. In some other examples, the identification tag is set for a plurality of trusted domains.

The processing circuitry 130 is configured to return poisoned data if the flag is set for the trusted domain for the read request and subsequent read requests for one or more addresses associated with the trusted domain. Poisoned data may be data which is different from the data that was actually stored in the corresponding requested one or more addresses. For example, poisoned data may be randomly generated data. In some examples, poisoned data may deliberately generated misleading or deceptive data provided which may specifically designed to appear legitimate requested data to the requestor. For example, the poisoned data may comprise a specific data pattern or value that is used to indicate that data is invalid or tainted and order to recognize the poisoned data during mitigation procedures.

In some examples, for the all the subsequent read requests for one or more addresses associated with the trusted domain poisoned data is returned no matter if the request comes from inside or outside the trusted domain, as long as the identification tag is set.

In some examples, after the identification tag is set for any further data request the identification tag indicates that poisoned data is to be returned for read requests to addresses associated with the trusted domain.

In some examples, for the read request and subsequent read requests for the address in volatile memory for which the read was requested return poisoned data is returned. In another example, for read requests to some or all addresses associated with the trusted domain poisoned data is returned. The data in the volatile memory, for instance the RAM, may be not altered or poisoned.

In some examples, the read request is a request for reading data from the address in RAM (for example ECC RAM), issued by an application, to fetch it into the cache for further processing. For example, the if the request is coming from a software outside of the trusted domain the processing circuitry 130 may return poisoned data, which is loaded into the cache. That is in some examples, the poisoned data is a poisoned cacheline.

Therefore, any detected attempt of from outside the trusted domain, for example from an untrusted software (such as a virtual machine monitor), to read data from the trusted domain memory will result in a shutdown of the trusted domain (i.e., returning poisoned data). Thereby attacks on the trusted domain by the attacker (such as a software), in which the attacker may ignore a plurality of failed attempts until achieving desired corruption of trusted domain that won't be detected, may be prevented.

In some examples, the processing circuitry 130 is configured to invoke a trusted domain-related management service to cause the trusted domain-related management service to perform one or more mitigation actions if the identification tag is set for a trusted domain.

The trusted domain-related management service may be an application which oversees the operation, security, and integrity of trusted domain within a computing system 150. The trusted domain-related management service may monitor the status of the trusted domains, perform mitigations and respond to security events, enforce security policies, manage access controls, and/or respond to changes in the trusted domain's status. The trusted domain-related management service may run in a special mode such as Secure Arbitration Mode (SEAM). It may also run in an embedded processor such as a security processor or management controller.

In some examples, the processing circuitry 130 may be configured to invoke the trusted domain-related management service to cause the trusted domain-related management service to evict one or more cachelines associated with the trusted domain. For example, the read request for the address in volatile memory was a read request by an untrusted software to load the data stored at the addresses in volatile memory associated with a trusted domain into the cache for further processing. For example, in this case the processing circuitry 130 may return poisoned data to the cache. A cache line is a contiguous block of data from main memory that is stored in the cache memory. For example, the one or more cachelines which stored the poisoned data may be evicted by the trusted domain-related management service. For example, the poisoned data may comprise a specific data pattern or value that is used to indicate that data is invalid or tainted and thereby it may be recognized by the trusted domain-related management service which triggers the eviction.

In some examples, a virtual machine (VM) may be designed to be a trusted domain, for example having a level of isolation and security akin to a TEE. For example, the VM may be executed in a trusted domain to ensure that the code and data of the VM is protected from the host, the virtual machine manger (VMM) and other VMs, effectively preventing unauthorized access and interference.

In some examples, the trusted domain may be used to enhance security in virtualized environments, for example in data centers and cloud computing. For example, Intel's Trusted Domain Extension (TDX) may be used, which is a TEE designed for virtualized environments. By leveraging hardware-based security features, TDX extends the principles of a TEE to the realm of virtualization, allowing sensitive workloads to be processed with a higher assurance of confidentiality and integrity. This approach is particularly beneficial in multi-tenant environments, where VMs from different clients reside on the same physical hardware, offering a robust solution to protect sensitive applications and data in shared computing resources. For example, the trusted domain-related management service is a Secure Arbitration Mode (SEAM) of a trusted domain architecture of a system (for example the computing system 150) comprising the memory controller.

In some examples, the processing circuitry 130 is configured to invoke the trusted domain-related management service to cause the trusted domain-related management service to perform a mitigation action with respect to an affected virtual machine. For example, the mitigation action with respect to an affected virtual machine comprise restoring the affected VM to a secure state, isolating the affected VM, restoring the VM from backups, applying security patches to VM, quarantining suspicious files or the complete VM or the like.

For example, the processing circuitry 130 is configured to invoke the trusted domain-related management service to cause the trusted domain-related management service to reset the identification tag for the trusted domain after having performed the one or more mitigation actions. For example, after the mitigation was carried out the identification tag is set to a state before the first read request was obtained from outside the trusted domain. For example, after resetting the identification tag, a read request for addresses associated with the trusted domain may then return the actual data of the addresses from within the trusted area.

In some examples, the processing circuitry 130 is configured to forego setting the identification tag if the address is associated with the trusted domain-related management service. For example, if the processing circuitry 130 encounters an address associated with the trusted domain-related management service, it may choose not to set the identification tag. For example, the data accessed at this address may not be flagged in any way, allowing the trusted domain-related management service to operate without interference.

In some examples, the processing circuitry 130 is configured to forego returning the poisoned data and return the data stored at the address associated with the trusted domain-related management service if the address is associated with the trusted domain-related management service. For example, when the processing circuitry 130 encounters an address associated with the trusted domain-related management service, it may opt not to return poisoned data. Instead, it retrieves and returns the actual data stored at that address, bypassing the above described poisoning mechanism. This allows the trusted domain-related management service to access and manipulate the data directly without interference from poisoning mechanisms described above.

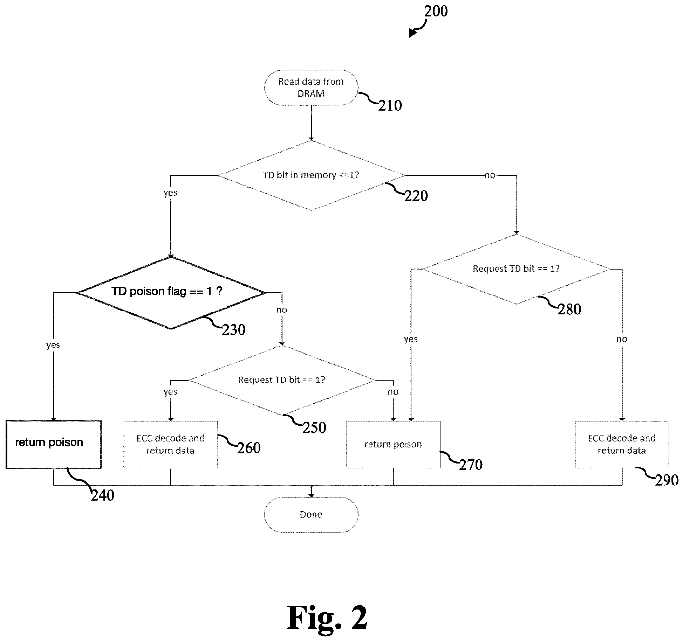

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 5).

Fig. 2 illustrates a flow chart 200 of the proposed technique. In step 210 a data read request to read data from volatile memory (such as DRAM or ECC RAM) is obtained. In step 220 it is checked whether a trusted domain (TD) bit in the memory is set to 1, which indicates that the requested data is stored in a memory address associated with a trusted domain. If the answer in step 220 is yes, then the process continues with step 230. In step 230 it is checked whether a TD poison flag is set to 1 (which indicates that requests to read from the address associated with the trusted domain is answered by returning poison). If the answer in step 230 is yes, then the process continues with step 240 and returns poison to the read request. If the answer in step 230 is no, then the process continues with step 250. In step 250 it is checked whether the request TD bit is set to 1, which indicates if the request is coming from inside the trusted domain (bit set to 1) or from outside the trusted domain (bit set to 0). If the answer in step 250 is yes, then the process continues with step 260 and returns ECC decode and returns the requested data. If the answer in step 250 is no, then the process continues with step 270 and returns poison. Further, in some examples in step 270 the TD poison flag may be set to 1. If the answer in step 220 is no, that is in case that the requested data is stored in a memory address that is not associated with a trusted domain the process continues with step 280. In step 280 checked whether the request TD bit is set to 1, which indicates if the request is coming from inside the trusted domain (bit set to 1) or from outside the trusted domain (bit set to 0). If the answer in step 280 is no, then the process continues with step 260 and returns ECC decode and returns the requested data. If the answer in step 250 is yes, then the process continues with step 270 and returns poison. Then the process ends.

The above described technique may yield a cross-domain memory corruption detection mechanism in a TEE. The TD poison flag may be implemented in a hardware register that may set by the memory controller as described herein when it detects a read request from outside the trusted domain (non-TD read) from TD memory. For example, a read request initiated by untrusted software (request TD bit = 0) and the returned data indicates that the data is stored (which is stored in ECC memory on writes) in a trusted domain (TD bit in memory = 1).

Further, the memory controller as described above may check the TD poison flag on every read that returns TD bit in memory =1 which indicates that the requested data is stored in a trusted domain memory. If said flag is set, the memory controller as described herein returns poisoned data to the CPU caches but may not poison the memory (e.g. by writing back a poison pattern which may be cleared later on). That is, if the untrusted software tries to read from a trusted domain, it will receive poison at all the reads by that TD memory.

In order to clean up the state, a trusted domain-related management service (such as TD SEAM module) may be invoked (called) via SEAMCALL instruction, at which point TD SEAM may check the status of the poison flag and if it is set the trusted domain-related management service (for example TDX) may reset the TD poison flag and clean up the affected software (such as the VMs) and evict all poisoned cachelines from the cache (e.g. by flushing the caches). In some examples, a trusted domain will detect poisoned lines, as consuming such lines will trigger poison exception.

Further, the trusted domain-related management service (for example the TDX module running in SEAM mode) may be protected by range registers (RRs) and may not be susceptible to violations within this memory range. This range (for example SEAM range) may therefore be left un-poisoned such that the trusted domain-related management service (for example the TDX module) may be able to recover from any TD memory rowhammered by the host VMM. Therefore, forward progress of the trusted domain-related management service (for example the TDX module) may be assured even when a TD's memory may have been corrupted.

Further, in some examples, if a trusted domain tries to read data from outside the trusted domain (i.e., non-TD memory), the memory controller as described herein may also return poison.

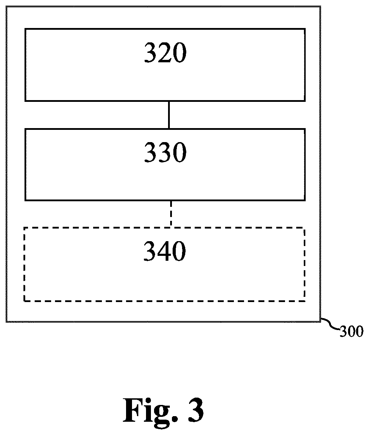

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 3 - 5).

### Apparatus for trusted domain-related service

**Fig. 3** illustrates a block diagram of an example of an apparatus 300 or device 300. The apparatus 300 comprises circuitry that is configured to provide the functionality of the apparatus 300. For example, the apparatus 300 of Fig. 3 comprises interface circuitry 320, processing circuitry 330 and (optional) storage circuitry 340. For example, the processing circuitry 330 may be coupled with the interface circuitry 320 and optionally with the storage circuitry 340. For example, the processing circuitry 330 may be configured to provide the functionality of the apparatus 300, in conjunction with the interface circuitry 320. For example, the interface circuitry 120 is configured to exchange information, e.g., with other components inside or outside the apparatus 300 and the storage circuitry 340. Likewise, the device 300 may comprise means that is/are configured to provide the functionality of the device 300.

The components of the device 300 are defined as component means, which may correspond to, or implemented by, the respective structural components of the apparatus 100. For example, the device 300 of Fig. 3 comprises means for processing 330, which may correspond to or be implemented by the processing circuitry 330, means for communicating 320, which may correspond to or be implemented by the interface circuitry 320, and (optional) means for storing information 340, which may correspond to or be implemented by the storage circuitry 340. In the following, the functionality of the device 300 is illustrated with respect to the apparatus 300. Features described in connection with the apparatus 300 may thus likewise be applied to the corresponding device 300.

In general, the functionality of the processing circuitry 330 or means for processing 330 may be implemented by the processing circuitry 330 or means for processing 330 executing machine-readable instructions. Accordingly, any feature ascribed to the processing circuitry 330 or means for processing 330 may be defined by one or more instructions of a plurality of machine-readable instructions. The apparatus 300 or device 300 may comprise the machine-readable instructions, e.g., within the storage circuitry 340 or means for storing information 340.

The interface circuitry 320 or means for communicating 320 may correspond to one or more inputs and/or outputs for receiving and/or transmitting information, which may be in digital (bit) values according to a specified code, within a module, between modules or between modules of different entities. For example, the interface circuitry 320 or means for communicating 320 may comprise circuitry configured to receive and/or transmit information.

For example, the processing circuitry 330 or means for processing 330 may be implemented using one or more processing units, one or more processing devices, any means for processing, such as a processor, a computer or a programmable hardware component being operable with accordingly adapted software. In other words, the described function of the processing circuitry 330 or means for processing 330 may as well be implemented in software, which is then executed on one or more programmable hardware components. Such hardware components may comprise a general-purpose processor, a Digital Signal Processor (DSP), a micro-controller, etc.

For example, the storage circuitry 340 or means for storing information 340 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

The processing circuitry 330 is configured to check, upon invocation of the trusted domain-related management service, whether an identification tag is set for a trusted domain. The identification tag is indicating that poisoned data is to be returned by a memory controller for read requests to addresses associated with the trusted domain.

The processing circuitry 330 is configured to perform one or more mitigation actions if the identification tag is set for the trusted domain.

The trusted domain-related management service may be an application which oversees the operation, security, and integrity of trusted domain within a computing system 150. The trusted domain-related management service may monitor the status of the trusted domains, perform mitigation actions (e.g., evicting cachelines) and respond to security events, enforce security policies, manage access controls, and/or respond to changes in the trusted domain's status. For example, the trusted domain-related management service may be Secure Arbitration Mode (SEAM) of a trusted domain architecture of a system comprising the memory controller.

In some examples, the processing circuitry 330 may be configured to evict one or more cachelines associated with the trusted domain if the identification tag is set for the trusted domain.

In some examples, the processing circuitry 330 may be configured to perform a mitigation action with respect to an affected virtual machine. For example, the VM may be designed to be a trusted domain, i.e., the VM may be executed in a trusted domain to ensure that the code and data of the VM is protected from the host, the VMM and other VMs, effectively preventing unauthorized access and interference.

In some examples, the processing circuitry 330 may be configured to reset the identification tag for the trusted domain after having performed the one or more mitigation actions.

In some examples, the identification tag is set for a single trusted domain and the processing circuitry 130 is configured to perform the one or more mitigation actions with respect to the single trusted domain.

In some examples, the identification tag is set for a plurality of trusted domains and the processing circuitry 130 is configured to perform the one or more mitigation actions with respect to the plurality of trusted domains.

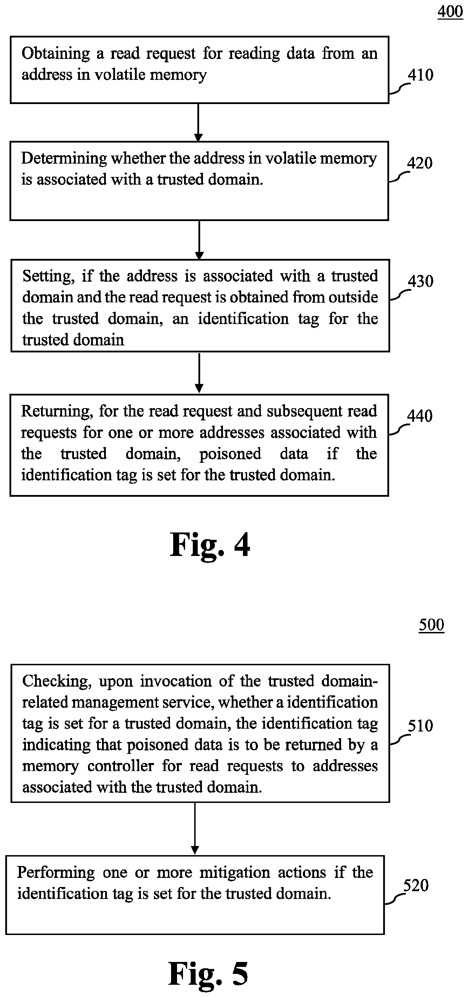

Further details and aspects are mentioned in connection with the examples described above or below. The example shown in Fig. 3 may include one or more optional additional features corresponding to one or more aspects mentioned in connection with the proposed concept or one or more examples described above (e.g., Figs. 1 -2) or below (e.g., Figs. 4 - 5).

**Fig. 4** illustrates a flowchart of an example of a method 400. The method 400 may, for instance, be performed by an apparatus as described herein, such as apparatus 100. The method 400 comprises obtaining 410 a read request for reading data from an address in volatile memory. The method 400 further comprises determining 420 whether the address in volatile memory is associated with a trusted domain. The method 400 further comprises setting 430 an identification tag for the trusted domain if the address is associated with a trusted domain and the read request is obtained from outside the trusted domain. The method 400 further comprises returning 440 poisoned data if the identification tag is set for the trusted domain, for the read request and subsequent read requests for one or more addresses associated with the trusted domain.

More details and aspects of the method 400 are explained in connection with the proposed technique or one or more examples described above, e.g., with reference to Fig. 1. The method 400 may comprise one or more additional optional features corresponding to one or more aspects of the proposed technique, or one or more examples described above.

**Fig. 5** illustrates a flowchart of an example of a method 500. The method 500 may, for instance, be performed by an apparatus as described herein, such as apparatus 300. The method 500 comprises checking 510, upon invocation of the trusted domain-related management service, whether an identification tag is set for a trusted domain, the identification tag indicating that poisoned data is to be returned by a memory controller for read requests to addresses associated with the trusted domain. The method 500 further comprising performing 520 one or more mitigation actions if the identification tag is set for the trusted domain.

More details and aspects of the method 500 are explained in connection with the proposed technique or one or more examples described above, e.g., with reference to Fig. 3. The method 400 may comprise one or more additional optional features corresponding to one or more aspects of the proposed technique, or one or more examples described above.

In the following, some examples of the proposed concept are presented:
An example (e.g., example 1) relates to a memory controller, the memory controller comprising interface circuitry and processor circuitry to obtain a read request for reading data from an address in volatile memory, determine whether the address in volatile memory is associated with a trusted domain, set, if the address is associated with a trusted domain and the read request is obtained from outside the trusted domain, an identification tag for the trusted domain, and return, for the read request and subsequent read requests for one or more addresses associated with the trusted domain, poisoned data if the flag is set for the trusted domain.

Another example (e.g., example 2) relates to a previous example (e.g., example 1) or to any other example, further comprising that the identification tag indicates that poisoned data is to be returned for read requests to addresses associated with the trusted domain.

Another example (e.g., example 3) relates to a previous example (e.g., example 1) or to any other example, further comprising that the processor circuitry is to invoke a trusted domain-related management service to cause the trusted domain-related management service to perform one or more mitigation actions if the identification tag is set for a trusted domain.

Another example (e.g., example 4) relates to a previous example (e.g., example 3) or to any other example, further comprising that the processor circuitry is to invoke the trusted domain-related management service to cause the trusted domain-related management service to evict one or more cachelines associated with the trusted domain.

Another example (e.g., example 5) relates to a previous example (e.g., one of the examples 3 or 4) or to any other example, further comprising that the processor circuitry is to invoke the trusted domain-related management service to cause the trusted domain-related management service to perform a mitigation action with respect to an affected virtual machine.

Another example (e.g., example 6) relates to a previous example (e.g., one of the examples 3 to 5) or to any other example, further comprising that the processor circuitry is to invoke the trusted domain-related management service to cause the trusted domain-related management service to reset the identification tag for the trusted domain after having performed the one or more mitigation actions.

Another example (e.g., example 7) relates to a previous example (e.g., one of the examples 3 to 6) or to any other example, further comprising that the trusted domain-related management service is a Secure Arbitration Mode (SEAM) of a trusted domain architecture of a system comprising the memory controller.

Another example (e.g., example 8) relates to a previous example (e.g., one of the examples 3 to 7) or to any other example, further comprising that the processor circuitry is to forego setting, if the address is associated with the trusted domain-related management service, the identification tag.

Another example (e.g., example 9) relates to a previous example (e.g., one of the examples 3 to 8) or to any other example, further comprising that the processor circuitry is to forego returning, if the address is associated with the trusted domain-related management service, poisoned data and return the data stored at the address associated with the trusted domain-related management service.

Another example (e.g., example 10) relates to a previous example (e.g., one of the examples 3 to 9) or to any other example, further comprising that the poisoned data is a poisoned cacheline.

Another example (e.g., example 11) relates to a previous example (e.g., one of the examples 3 to 10) or to any other example, further comprising that the identification tag is set for a single trusted domain.

Another example (e.g., example 12) relates to a previous example (e.g., one of the examples 3 to 11) or to any other example, further comprising that the identification tag is set for a plurality of trusted domains.

An example (e.g., example 13) relates to a method for a memory controller, the method comprising obtaining a read request for reading data from an address in volatile memory, determining whether the address in volatile memory is associated with a trusted domain, setting, if the address is associated with a trusted domain and the read request is obtained from outside the trusted domain, a identification tag for the trusted domain, and returning, for the read request and subsequent read requests for one or more addresses associated with the trusted domain, poisoned data if the identification tag is set for the trusted domain.

Another example (e.g., example 14) relates to a previous example (e.g., example 13) or to any other example, further comprising invoking a trusted domain-related management service to cause the trusted domain-related management service to perform one or more mitigation actions if the identification tag is set for a trusted domain.

Another example (e.g., example 15) relates to a previous example (e.g., example 14) or to any other example, further comprising invoking the trusted domain-related management service to cause the trusted domain-related management service to evict one or more cachelines associated with the trusted domain.

Another example (e.g., example 16) relates to a previous example (e.g., one of the examples 14 or 15) or to any other example, further comprising invoking the trusted domain-related management service to cause the trusted domain-related management service to perform a mitigation action with respect to an affected virtual machine.

Another example (e.g., example 17) relates to a previous example (e.g., one of the examples 14 to 16) or to any other example, further comprising invoking the trusted domain-related management service to cause the trusted domain-related management service to reset the identification tag for the trusted domain after having performed the one or more mitigation actions.

Another example (e.g., example 18) relates to a previous example (e.g., one of the examples 14 to 17) or to any other example, further comprising that the trusted domain-related management service is a Secure Arbitration Mode (SEAM) of a trusted domain architecture of a system comprising the memory controller.

Another example (e.g., example 19) relates to a previous example (e.g., one of the examples 14 to 18) or to any other example, further comprising foregoing setting, if the address is associated with the trusted domain-related management service, the identification tag.

Another example (e.g., example 20) relates to a previous example (e.g., one of the examples 14 to 19) or to any other example, further comprising foregoing returning, if the address is associated with the trusted domain-related management service, poisoned data and return the data stored at the address associated with the trusted domain-related management service.

An example (e.g., example 21) relates to an apparatus for providing a trusted domain-related management service, the apparatus comprising interface circuitry, machine-readable instructions, and processor circuitry to execute the machine-readable instructions to check, upon invocation of the trusted domain-related management service, whether a identification tag is set for a trusted domain, the identification tag indicating that poisoned data is to be returned by a memory controller for read requests to addresses associated with the trusted domain, and perform one or more mitigation actions if the identification tag is set for the trusted domain.

Another example (e.g., example 22) relates to a previous example (e.g., example 21) or to any other example, further comprising that the processor circuitry is to execute the machine-readable instructions to evict one or more cachelines associated with the trusted domain if the identification tag is set for the trusted domain.

Another example (e.g., example 23) relates to a previous example (e.g., one of the examples 21 or 22) or to any other example, further comprising that the processor circuitry is to execute the machine-readable instructions to perform a mitigation action with respect to an affected virtual machine.

Another example (e.g., example 24) relates to a previous example (e.g., one of the examples 21 to 23) or to any other example, further comprising that the processor circuitry is to execute the machine-readable instructions to reset the identification tag for the trusted domain after having performed the one or more mitigation actions.

Another example (e.g., example 25) relates to a previous example (e.g., one of the examples 21 to 24) or to any other example, further comprising that the trusted domain-related management service is a Secure Arbitration Mode (SEAM) of a trusted domain architecture of a system comprising the memory controller.

Another example (e.g., example 26) relates to a previous example (e.g., one of the examples 21 to 25) or to any other example, further comprising that the identification tag is set for a single trusted domain and the processor circuitry is to execute the machine-readable instructions to perform the one or more mitigation actions with respect to the single trusted domain.

Another example (e.g., example 27) relates to a previous example (e.g., one of the examples 21 to 26) or to any other example, further comprising that the identification tag is set for a plurality of trusted domains and the processor circuitry is to execute the machine-readable instructions to perform the one or more mitigation actions with respect to the plurality of trusted domains.

An example (e.g., example 28) relates to a method for providing a trusted domain-related management service, the method comprising checking, upon invocation of the trusted domain-related management service, whether an identification tag is set for a trusted domain, the identification tag indicating that poisoned data is to be returned by a memory controller for read requests to addresses associated with the trusted domain, and performing one or more mitigation actions if the identification tag is set for the trusted domain.

Another example (e.g., example 29) relates to a previous example (e.g., example 28) or to any other example, further comprising evicting one or more cachelines associated with the trusted domain if the identification tag is set for the trusted domain.

Another example (e.g., example 30) relates to a previous example (e.g., one of the examples 28 or 29) or to any other example, further comprising performing a mitigation action with respect to an affected virtual machine.

Another example (e.g., example 31) relates to a previous example (e.g., one of the examples 28 to 30) or to any other example, further comprising resetting the identification tag for the trusted domain after having performed the one or more mitigation actions.

Another example (e.g., example 32) relates to a previous example (e.g., one of the examples 28 to 31) or to any other example, further comprising that the trusted domain-related management service is a Secure Arbitration Mode (SEAM) of a trusted domain architecture of a system comprising the memory controller.

An example (e.g., example 33) relates to a device comprising means for processing for obtaining a read request for reading data from an address in volatile memory, determining whether the address in volatile memory is associated with a trusted domain, setting, if the address is associated with a trusted domain and the read request is obtained from outside the trusted domain, an identification tag for the trusted domain, and returning, for the read request and subsequent read requests for one or more addresses associated with the trusted domain, poisoned data if the flag is set for the trusted domain.

An example (e.g., example 34) relates to a device comprising means for processing for checking, upon invocation of the trusted domain-related management service, whether an identification tag is set for a trusted domain, the identification tag indicating that poisoned data is to be returned by a memory controller for read requests to addresses associated with the trusted domain, and performing one or more mitigation actions if the identification tag is set for the trusted domain.

Another example (e.g., example 35) relates to a system comprising the memory controller according to one of the examples 1 to 12.

Another example (e.g., example 36) relates to the system according to example 35, further comprising the apparatus according to one of the examples 21 to 27.

Another example (e.g., example 37) relates to a non-transitory, computer-readable medium comprising a program code that, when the program code is executed on a processor, a computer, or a programmable hardware component, causes the processor, computer, or programmable hardware component to perform the method of any one of examples 13 to 20.

Another example (e.g., example 38) relates to a non-transitory, computer-readable medium comprising a program code that, when the program code is executed on a processor, a computer, or a programmable hardware component, causes the processor, computer, or programmable hardware component to perform the method of any one of examples 28 to 32.

Another example (e.g., example 39) relates to a computer program having a program code for performing the method of any one of examples 13 to 20 or 28 to 32 when the computer program is executed on a computer, a processor, or a programmable hardware component.

Another example (e.g., example 40) relates to a machine-readable storage including machine readable instructions, when executed, to implement a method or realize an apparatus as described in any pending examples.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising , for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A memory controller comprising processing circuitry to:
obtain a read request for reading data from an address in volatile memory;
determine whether the address in volatile memory is associated with a trusted domain;
set, if the address is associated with a trusted domain and the read request is obtained from outside the trusted domain, an identification tag for the trusted domain; and
return, for the read request and subsequent read requests for one or more addresses associated with the trusted domain, poisoned data if the flag is set for the trusted domain.

2. The memory controller according to claim 1, wherein the identification tag indicates that poisoned data is to be returned for read requests to addresses associated with the trusted domain.

3. The memory controller according to any one of claims 1 to 2, wherein the processing circuitry is configured to invoke a trusted domain-related management service to cause the trusted domain-related management service to perform one or more mitigation actions if the identification tag is set for a trusted domain.

4. The memory controller according to claim 3, wherein the processing circuitry is configured to invoke the trusted domain-related management service to cause the trusted domain-related management service to evict one or more cachelines associated with the trusted domain.

5. The memory controller according to any one of claims 3 to 4, wherein the processing circuitry is configured to invoke the trusted domain-related management service to cause the trusted domain-related management service to perform a mitigation action with respect to an affected virtual machine.

6. The memory controller according to any one of claims 3 to 5, wherein the processing circuitry is configured to invoke the trusted domain-related management service to cause the trusted domain-related management service to reset the identification tag for the trusted domain after having performed the one or more mitigation actions.

7. The memory controller according to any one of claims 3 to 6, wherein the trusted domain-related management service is a Secure Arbitration Mode (SEAM) of a trusted domain architecture of a system comprising the memory controller.

8. The memory controller according to any one of claims 3 to 7, wherein the processing circuitry is configured to forego setting, if the address is associated with the trusted domain-related management service, the identification tag.

9. The memory controller according to any one of claims 3 to 8, wherein the processing circuitry is configured to forego returning, if the address is associated with the trusted domain-related management service, poisoned data and return the data stored at the address associated with the trusted domain-related management service.

10. The memory controller according to any one of claims 1 to 9, wherein the poisoned data is a poisoned cacheline.

11. The memory controller according to any one of claims 1 to 10, wherein the identification tag is set for a single trusted domain.

12. The memory controller according to any one of claims 1 to 11, wherein the identification tag is set for a plurality of trusted domains.

13. A method for a memory controller, the method comprising:
obtaining a read request for reading data from an address in volatile memory;
determining whether the address in volatile memory is associated with a trusted domain;
setting, if the address is associated with a trusted domain and the read request is obtained from outside the trusted domain, an identification tag for the trusted domain; and
returning, for the read request and subsequent read requests for one or more addresses associated with the trusted domain, poisoned data if the identification tag is set for the trusted domain.

14. An apparatus for providing a trusted domain-related management service, the apparatus comprising processing circuitry configured to:
check, upon invocation of the trusted domain-related management service, whether an identification tag is set for a trusted domain, the identification tag indicating that poisoned data is to be returned by a memory controller for read requests to addresses associated with the trusted domain; and
perform one or more mitigation actions if the identification tag is set for the trusted domain.

15. The apparatus according to claim 14, wherein the processing circuitry is further configured to evict one or more cachelines associated with the trusted domain if the identification tag is set for the trusted domain.
